# EUROPEAN PATENT SPECIFICATION

(11) **EP 0 625 074 B1**
(45) Date of publication and mention of the grant of the patent: **27.05.1998**
(21) Application number: 93923984.4
(22) Date of filing: 01.11.1993
(51) Int. Cl.: B04C 3/00, B01D 21/01, B01D 21/26, B01D 21/00, B01D 21/08, B01D 21/24

(54) **VORTEX FLOCCULATION OF SOLIDS SUSPENDED IN LIQUID**
WIRBELFLOCKUNG VON SCHWEBENDEN FESTSTOFFEN AUS EINER FLUESSIGKEIT
FLOCULATION TOURBILLONNAIRE DE SOLIDE EN SUSPENSION DANS UN LIQUIDE

(30) Priority: 30.10.1992 AU PL5589/92; 09.08.1993 AU PM0424/93
(43) Date of publication of application: 23.11.1994
(73) Proprietor: RODGERS, William, Chipping Norton, NSW 2170 (AU)
(72) Inventor: RODGERS, William, Chipping Norton, NSW 2170 (AU)
(74) Representative: King, Bertram Thomas
(86) International application number: AU9300566
(87) International publication number: WO9409908

(56) References cited:
- FR-A- 2 630 658
- GB-A- 1 153 032
- GB-A- 2 035 816
- US-A- 2 411 386
- US-A- 3 965 013
- US-A- 4 146 468
- US-A- 5 124 034
- US-A- 5 124 049
- PATENT ABSTRACTS OF JAPAN, C-844, page 3; & JP,A,03 080 902 (AOKI CORP) 5 April 1991 (05.04.91).

## Description

This invention relates to the separation of solids from the liquid in which they are suspended.

Suspended solid particles in a liquid such as water will float or sink at a velocity which is a function of the size of the particles, the specific gravity difference between the solids and the liquid and the viscosity of the liquid. The smaller the particles, the lower is the settling velocity, which effectively becomes zero for small "colloidal" particles. If the particles settle rapidly they can be separated from a liquid stream more readily.

The settling velocity can be increased by collecting the particles into "flocs' which are agglomerations of the particles, where the flocs act as one composite particle and settle more rapidly than the particles making up the flocs would settle. The creation of flocs is usually promoted by adding chemicals to the liquid, either coagulants or flocculants, which act upon the electrical charges on the particles. The flocs grow by collision between particles in the fluid as it is agitated or mixed and the particles are held together after colliding by forces of electrical attraction.

For flocs to grow and settle rapidly the fluid mixing is such that the particles collide in the velocity gradients created by the mixing.

This invention is concerned with the manner of mixing liquid having suspended particles with flocculating agents to promote the accelerated growth of flocs. It is known to promote flocculation using stirrer type apparatus. With the method and apparatus provided by this invention uniform sized flocs can be formed in a controlled manner, this is not possible with conventional stirred apparatus.

A practical use for the method of the invention would be for the treatment of water. For example, water from reservoirs where contaminants have mixed with the water, such water being for use as drinking water or for commercial purposes. Another example would be for the treatment of water which has been contaminated by use, such as industrial processes or in a sewerage system.

Attempts have been made to promote flocculation in contaminated liquids in order to separate out contaminating solids. One prior art patent in this field is U.S. 5124049 which discloses a method of promoting the formation of flocs comprising the steps of passing a liquid having suspended particles and an added flocculant as a vortex flow through a tapered conduit where the conduit is circular in cross-section and increases in cross-sectional size in the direction of liquid flow through the conduit.

U.S. Patent 3965013 and patent abstracts of Japan C-844, page 3, relating to Japanese Patent Application JP,A,3-80902, also provide information on separation of solids from liquids using flocculation techniques.

This invention provides a method promoting the formation of flocs comprising the steps of mixing a liquid having suspended particles with gas under pressure and expanding the gas/liquid mixture to a lower pressure and passing the mixture as a vortex flow through a tapered conduit where the conduit is circular in cross-section and increases in cross-sectional size in the direction of liquid flow through the conduit, wherein the taper of the conduit is not such that the flow will leave the conduit wall.

The invention further provides in addition to the above method the additional step in which a flocculent is mixed with said liquid at or prior to entry into the inlet of the conduit.

The method identified above involves a rapid mixing of the particle supporting liquid with the flocculant forming chemicals to promote an even dispersion of the chemicals in the liquid and also frequent collisions between the particles in the liquid. The large shear forces and high velocity gradients created by the rapid mixing creates an environment where the development of large flocs is prevented and an equilibrium floc size develops for a particular velocity gradient. In view of this the floc size and the settling rate can be varied by increasing or decreasing the velocity gradients in the liquid.

If rapidly settling large flocs are required the liquid is mixed rapidly to disperse the chemicals as they are added and the velocity gradients are gradually reduced to allow the flocs to grow to the desired size for the required settling rate.

This invention also provides apparatus including means to mix a liquid having suspended particles with gas under pressure, means for expanding the gas/liquid mixture by reducing its pressure, and means for passing the reduced pressure mixture as a vortex flow through a tapered conduit from a small end of the conduit to a large end of the conduit, wherein the taper of the conduit is not such that the flow will leave the conduit wall.

The apparatus of the invention has been devised to provide the above conditions. The liquid containing the particles and the coagulant chemicals is introduced into the inlet (bottom) end of a tapered conduit of circular cross-section which increases in size in the direction away from the inlet. The entry of the liquid into the conduit is arranged to provide a vortex flow in the liquid which rotates about the axis of the conduit, which axis is usually vertical. It is to be understood however that the method of the invention can be performed where the axis of the apparatus and the vortex flow through the apparatus is not vertical. The mixing of the chemicals and the liquid is very vigorous and the velocity gradients are very high. As the liquid flows through the conduit the cross-sections size of the conduit increases and accordingly the velocity of the liquid and the velocity gradients decrease, and correspondingly the equilibrium size of the flocs will increase.

It is essential that the taper of the conduit is not such that the flow will leave the conduit wall and cause turbulence as this will interfere with the uniform decrease of the velocity gradients as the liquid passes through the conduit.

The conduit may be conical in shape, or it may be of varying rate of change in diameter along its length, such as is to found in a trumpet. The shape can be calculated so that the diffusing vortex flow does not separate.

In a representative apparatus the conduit is conical and is usually vertically disposed with the large open end of the cone uppermost. There is a vortex forming means at or adjacent the small end of the cone. The vortex forming means can be a tangential discharge liquid feed pipe discharging liquid under pressure into the conduit, it can be a feed pipe axially or otherwise entered into the conduit from below or above fitted with a head from which the feed liquid is discharged under pressure at an angle to the axis of the conduit thereby to form a vortex flow in the conduit.

On discharge from the conduit the fluid will have been prepared so that the suspended solids as flocs will settle rapidly in a settling basin which may be circular in shape and surround the apparatus.

In a variation of the above method dissolved air flotation is added. Dissolved air flotation involves saturating the liquid with air or gas at pressure and then expanding the mixture to a lower pressure so the air or gas becomes supersaturated at the lower pressure and micro bubbles are formed in the liquid around the solid particles which act as nuclei. The micro bubbles increase in size as more air comes out of solution and the bubbles with their attached solid particles rise to the surface of the liquid and form a floating layer. The floating layer is then scraped from the surface of the liquid. The above process can be enhanced by the addition of coagulants or flocculants.

Liquid treated as above is introduced into the inlet end of a conical conduit, as before described. The centrifugal forces acting in the vortex cause the lighter materials to tend to float towards the centre of the vortex as well as upwardly. In this way the rising flocs will move away from the walls of the cone and proceed upwardly leaving substantially clear liquid adjacent the conduit walls.

This tendency increases as the flow rises in the cone so that at the top surface of the conical vessel the floating flocs will congregate towards the centre leaving a margin of clear liquid around the congregation of flocs.

In a proposed arrangement for the collection of the flocs, there would be a collecting/settling tank around the outlet end of the conduit and spaced therefrom so that water discharging over the outlet end rim will flow into the tank. Around the outlet end of the conduit and spaced therefrom but inside the tank there would be a retaining baffle with an upper edge above the outlet end of the conduit and a lower edge below the outlet end of the conduit. The water flow to the tank from the conduit would pass under the baffle and the floating flocs would be retained within the baffle. The floating layer of flocs can be removed either by suction or by some mechanical means as they accumulate.

In another arrangement the water from the conduit with its flocs would be discharged into a settling tank where the flocs would float or sink, depending upon the relative densities of the water and the flocs and the particles and whether the liquid had been aerated. The flocs would be collected from the surface of the tank or from the bottom of the tank as required by conventional means.

## Claims

1. A method of promoting the formation of flocs comprising the steps of mixing a liquid having suspended particles with gas under pressure and expanding the gas/liquid mixture to a lower pressure and then causing the mixture to pass as a vortex flow through a tapered conduit where the conduit is circular in cross-section and increases in cross - sectional size in the direction of flow through the conduit, wherein the taper of the conduit is not such that the flow will leave the conduit wall.

2. A method as claimed in claim 1 including the additional step of mixing a flocculent with said liquid.

3. Apparatus for carrying out the method of claim 1 including means to mix a liquid having suspended particles with gas under pressure, means for expanding the gas/liquid mixture by reducing its pressure, and means for passing the reduced pressure mixture as a vortex flow through a tapered conduit from a small end of the conduit to a large end of the conduit, wherein the taper of the conduit is not such that the flow will leave the conduit wall.

4. Apparatus as claimed in claim 3 where the conduit has a constant angle of taper between the conduit small and large ends.

5. Apparatus as claimed in claim 3 where the angle of taper of the conduit is not constant.

6. Apparatus is claimed in any one of claims 3 to 5 where the means for passing the mixture through the conduit as a vortex flow includes a tangential inlet through a wall of the conduit adjacent said small end of said conduit.

7. Apparatus as claimed in any one of claims 3 to 5 where the means for passing the mixture through the conduit as a vortex flow includes a tangentially discharging discharge head disposed within the conduit adjacent said small end of the conduit.

## Patentansprüche

1. Verfahren zur Begünstigung der Flockenbildung umfassend die Verfahrensschritte Mischen einer schwebende Partikel enthaltenden Flüssigkeit mit Gas unter Druck und Ausdehnen des Gas/Flüssigkeitsgemisches auf einen niedrigeren Druck und anschließendem Durchtritt des Gemisches als Wirbelstrom durch eine sich konisch verjüngende Leitung mit kreisförmigem Querschnitt, der sich in Fließrichtung erweitert, wobei die Querschnittsänderung der Leitung so gewählt ist, daß kein Abriß der Strömung an der Leitungswandung erfolgt.

2. Verfahren nach Anspruch 1, umfassend den weiteren Verfahrensschritt Zumischen eines Flockenbildners zu der Flüssigkeit.

3. Vorrichtung zur Durchführung des Verfahrens nach Anspruch 1 mit Mitteln zum Mischen einer schwebende Partikel enthaltenden Flüssigkeit mit einem Gas unter Druck, Mitteln zum Ausdehnen des Gas/Flüssigkeitsgemisches durch Verringerung seines Drucks und Mittel zur Weiterleitung des Gemisches mit niedrigerem Druck als Wirbelstrom durch eine konische Leitung vom Ende des kleineren Querschnitts zum Ende des größeren Querschnitts, wobei die Querschnittsänderung der Leitung so gewählt ist, daß kein Abbriß der Strömung an der Leitungswandung erfolgt.

4. Vorrichtung nach Anspruch 3, in der der Konuswinkel der Leitung zwischen dem engen und dem weiten Ende konstant ist.

5. Vorrichtung nach Anspruch 3, in der der Konuswinkel der Leitung zwischen dem engen und dem weiten Ende nicht konstant ist.

6. Vorrichtung nach einem der Ansprüche 3 bis 5, in der die Mittel, die das Gemisch als Wirbelstrom durch die Leitung fließen lassen, aus einem tangentialen Einlaß an einer Wandung der Leitung im Bereich des engen Endes der Leitung bestehen.

7. Vorrichtung nach einem der Ansprüche 3 bis 5, in der die die Wirbelströmung im Gemisch erzeugenden Mittel aus einem tangential zuleitenden Kopf (Düse) bestehen, der in der Leitung im Bereich des engen Leitungsendes angeordnet ist.

## Revendications

1. Procédé destiné à favoriser la formation de flocs, comprenant les étapes suivantes : le mélange d'un liquide, ayant des particules en suspension, à un gaz sous pression, et la détente du mélange gaz-liquide à une pression plus faible, puis le passage du mélange sous forme d'un courant tourbillonnaire dans un conduit à dimension variant progressivement, le conduit ayant une section circulaire et la dimension de sa section augmentant dans la direction d'écoulement dans le conduit, la variation de dimension du conduit n'étant pas telle que le courant quitte la paroi du conduit.

2. Procédé selon la revendication 1, comprenant l'étape supplémentaire de mélange d'un agent floculant au liquide.

3. Appareil destiné à la mise en oeuvre du procédé selon la revendication 1, comprenant un dispositif de mélange d'un liquide contenant des particules en suspension avec un gaz sous pression, un dispositif de détente du mélange gaz-liquide par réduction de sa pression, et un dispositif de circulation du mélange à pression réduite sous forme d'un courant tourbillonnaire dans un conduit à dimension variant progressivement d'une petite extrémité du conduit à une grande extrémité du conduit, la variation de dimension du conduit n'étant pas telle que le courant quitte la paroi du conduit.

4. Appareil selon la revendication 3, dans lequel le conduit a un angle constant d'inclinaison entre la petite extrémité et la grande extrémité du conduit.

5. Appareil selon la revendication 3, dans lequel l'angle d'inclinaison du conduit n'est pas constant.

6. Appareil selon l'une quelconque des revendications 3 à 5, dans lequel le dispositif destiné à faire passer le mélange dans le conduit sous forme d'un courant tourbillonnaire comprend une entrée tangentielle passant dans une paroi du conduit près de la petite extrémité du conduit.

7. Appareil selon l'une quelconque des revendications 3 à 5, dans lequel le dispositif destiné à faire passer le mélange dans le conduit sous forme d'un courant tourbillonnaire comprend une tête à évacuation tangentielle placée dans le conduit près de la petite extrémité de celui-ci.
